# EUROPEAN PATENT APPLICATION

(11) **EP 3 567 006 A1**
(43) Date of publication of application: **13.11.2019**
(21) Application number: 18171259.7
(22) Date of filing: 08.05.2018
(51) Int. Cl.: C01C 1/04, C01B 21/26, C01B 21/28

(54) **A PROCESS FOR NITRIC ACID PRODUCTION**

(71) Applicant: CASALE SA, 6900 Lugano (CH)
(72) Inventor: FILIPPI, Ermanno, 6976 Castagnola (CH); OSTUNI, Raffaele, 6900 Lugano (CH); BARATTO, Francesco, 22100 Como (IT)
(74) Representative: Zardi, Marco

(57) **Abstract**

Integrated process for the synthesis of ammonia and nitric acid including: a) production of an ammonia make-up synthesis gas, comprising steam reforming of a hydrocarbon feedstock under provision of steam reforming heat; catalytic conversion of said make-up synthesis gas into ammonia; catalytic oxidation of a stream of ammonia obtaining a process gas; absorption of said process gas with water obtaining nitric acid, wherein at least a portion of the steam reforming heat is recovered from said hot process gas.

## Description

### Field of the invention

The invention relates to the field of nitric acid production.

### Prior art

Nitric acid is synthesized by reacting ammonia and oxygen. In particular, one mole of nitric acid is obtained by reacting one mole of ammonia with two moles of oxygen, according to the reaction:

NH3 + 2O2 → HNO3 + H2O (1)

The synthesis of nitric acid basically involves the catalytic oxidation of ammonia to produce a gas containing nitrogen oxides NOx (mainly NO and NO2), N2O as byproduct, oxygen and nitrogen, and a subsequent step wherein said gas is contacted with water which reacts with NO2 to produce nitric acid. Said reaction of NO2 with water yielding nitric acid is commonly termed absorption. As NO2 is absorbed, NO reacts with O2 to make more NO2.

The step of absorption generally also delivers a tail gas containing N2O and residual NOx. Said tail gas is at pressure above atmospheric and is normally work-expanded in a suitable turbine for energy recovery before being discharged into the atmosphere.

The input ammonia used to make nitric acid is typically provided by an independent process. Said process basically involves the conversion of a hydrocarbon feedstock (e.g. natural gas) to produce a raw hydrogen-containing synthesis gas, and subsequent purification of said raw gas. The conversion of said hydrocarbon feedstock preferably includes a step of steam reforming under provision of steam reforming heat commonly provided by combustion of a fuel (e.g. natural gas). Steam reforming is typically performed in a steam reformer comprising a furnace/radiant section and a convection section which recovers heat from the flue gas leaving the radiant section at about 1000°C. The purification of the raw hydrogen-containing synthesis gas typically comprises CO shift conversion into CO2, CO2 removal and optionally methanation. The resulting synthesis gas is converted into ammonia.

However, the above process for the synthesis of nitric acid results in the production of a considerable amount of steam, in excess of the amount required by the process itself, thus in high energy consumption, and high investment costs.

Steam is basically produced by thermal recovery from the catalytic oxidation of ammonia. Part of said steam is used to feed the steam turbine of a compressor train of the nitric acid plant, which generally comprises an air compressor, a nitrous gas compressor (in dual-pressure plants), a tail gas turbine and said steam turbine. However, said steam is largely in excess with respect to the internal steam consumption and therefore cannot be entirely used in the nitric acid process itself.

Said steam can neither be used in the above process for the synthesis of ammonia, which is self-sufficient and wherein steam is mainly produced by cooling the effluent of the steam reforming, by thermal recovery from the CO shift, and by conversion of the synthesis gas into ammonia. For this reason, modern ammonia plants do not even require to operate natural gas-fired auxiliary boilers for the generation of additional steam in normal operation, or they keep the auxiliary boilers at minimum load with minimum steam generation only to enable fast ramp-up of boiler steam generation in case of need. Therefore, the amount of steam produced in the ammonia process is dictated by the process itself and cannot be reduced (e.g. by decreasing the natural gas feed to said auxiliary boilers) so as to exploit the excess steam from the nitric acid process.

According to some prior art, the nitric acid process is integrated with a process for the production of ammonium nitrate, wherein one mole of ammonium nitrate is obtained by reacting one mole of nitric acid with one mole of ammonia, according to the reaction:

HNO3 + NH3 → NH4NO2 (2)

Accordingly, the synthesis of one mole of ammonium nitrate consumes two moles of ammonia, one of which is used for the production of the intermediate nitric acid.

The process for the production of ammonium nitrate, however, consumes only a portion of the excess steam from the nitric acid process, while the remaining portion remains unexploited.

It follows that the above nitric acid process results in a significant waste of steam. For example, a nitric acid plant with a nitric acid production rate of 1'500 t/d consumes 425 t/d of ammonia and produces 50 t/h of excess steam at 40 bar and 400 °C, which correspond to 40 Gcal/h of natural gas. An ammonia plant with an ammonia production rate of 425 t/d consumes 250 Gcal/h of natural gas, i.e. 200 Gcal/h as process gas and 50 Gcal/h as fuel. Since the ammonia plant is self-sufficient for the steam production, the excess steam from the nitric acid plant cannot be used for the synthesis of ammonia and a potential save of natural gas equal to 15% (40 Gcal/h / 250 Gcal/h), which would be a huge amount, cannot be achieved.

Since steam is a valuable product, it is desired to keep its excess as low as possible. Furthermore, the production of steam increases alongside with the efficiency of the nitric acid process and the ammonia process, because for both processes a higher efficiency generally entails lower usage of steam; it follows that the efficiency increase of such processes is strongly discouraged because it could merely result in increase of excess steam.

### Summary of the invention

The invention aims to overcome the above drawbacks of the prior art. In particular, the present invention aims to provide a nitric acid process with low investment costs and low energy consumption. More in particular, the present invention aims to keep excess steam as low as possible, thus avoiding significant losses of steam which is a valuable product.

These aims are reached with an integrated process for the synthesis of ammonia and nitric acid according to claim 1.

Said process comprises a synthesis of ammonia including:
a) production of an ammonia make-up synthesis gas, comprising steam reforming of a hydrocarbon feedstock under provision of steam reforming heat;
b) catalytic conversion of said make-up synthesis gas into ammonia,
and a synthesis of nitric acid including:
c) catalytic oxidation of a stream of ammonia, obtaining a hot process gas containing NO2, and
d) absorption of said process gas in water, wherein NO2 react with water to produce a product stream containing nitric acid and a tail gas containing nitrogen,
said process being characterized in that at least part of said steam reforming heat is recovered from the hot process gas obtained from the catalytic oxidation of said stream of ammonia.

The term of "ammonia make-up synthesis gas" denotes a synthesis gas comprising hydrogen (H2) and nitrogen (N2) in a suitable ratio for the synthesis of ammonia (NH3).

Said hydrocarbon feedstock is preferably a light hydrocarbon feedstock, such as natural gas.

Said process advantageously comprises mixing the hydrocarbon feedstock with steam and pre-heating the resulting mixture upstream of the steam reforming, thus providing a pre-heated feed stream directed to the steam reforming. Said pre-heated feed stream has a temperature preferably greater than 400 °C, more preferably greater than 450 °C, for example of about 500 °C.

The tail gas obtained from said step d) of absorption mainly contains nitrogen, but also contains significant amounts of impurities. Said impurities essentially include N2O obtained e.g. as byproduct of the catalytic oxidation, residual NOx (e.g. NO and NO2), oxygen, water, argon and carbon oxides (e.g. CO2). The oxygen content is preferably above 4% by volume. Before being discharged into atmosphere, said tail gas is work-expanded in a suitable expander for energy recovery.

Said tail gas is advantageously subjected to a process of NOx and N2O removal, which provides a treated tail gas impoverished of NOx and N2O and mainly consisting of nitrogen. According to various embodiments, said process may be performed both upstream (tertiary removal) and downstream of the tail gas expander (quaternary removal). For simplicity, the tail gas immediately downstream of the absorption step d) will be referred to below as first tail gas, while the treated tail gas resulting from the process of NOx and N2O removal will be referred to below as second tail gas.

The steam reforming heat includes a first heat and a second heat, wherein said first heat is supplied to pre-heat the mixture obtained by mixing the hydrocarbon feedstock with steam before the steam reforming and said second heat is supplied to a reaction stream undergoing the steam reforming, namely it is supplied during the steam reforming.

The steam reforming is an endothermic process and is performed at a temperature preferably greater than 600 °C, more preferably greater than 750 °C. The latter is intended as the temperature of the effluent of the steam reforming.

According to a preferred embodiment, at least part of the second heat is recovered from the hot process gas obtained from said step c). Preferably, at least 30% of the second heat is recovered from said hot process gas, more preferably at least 50%, even more preferably at least 70%. In a preferred embodiment, said second heat is entirely recovered from said hot process gas.

Preferably, at least part of the second heat is recovered by indirect heat exchange between the reaction stream and the hot process gas effluent of said step c). The term "effluent" refers to the process gas immediately after said step c), namely to the process gas as it exits the reactor performing said step c).

Said step c) of catalytic oxidation is an exothermal process and is performed adiabatically. The effluent process gas has a temperature preferably greater than 700 °C, more preferably greater than 850 °C, even more preferably of around 900 °C.

Preferably, the first heat or a portion thereof is recovered from a stream of process gas after transferring said at least part of the second heat to the reaction stream undergoing the steam reforming. Said stream of process gas has a temperature preferably from 300 to 700 °C, more preferably from 450 to 600 °C.

Preferably, said first heat or portion thereof is recovered by indirect heat exchange in a dedicated heat exchanger between said stream of process gas and the mixture obtained by mixing the hydrocarbon feedstock with steam. Accordingly, said stream of process gas acts as hot source for the step of pre-heating the mixture obtained by mixing the hydrocarbon feedstock with steam. Preferably, said first heat is entirely recovered from said stream of process gas.

According to a particular embodiment, only a portion of the second heat is recovered from said hot process gas. Another portion thereof is preferably provided by combustion of a fuel in a dedicated burner, which provides a hot flue gas. The fuel preferably comprises hydrogen and/or hydrocarbons (e.g. natural gas) and the oxidising agent is preferably the same as that used for step c). Preferably, said oxidising agent is air.

Preferably, at least 30% of the second heat is provided by thermal recovery of the hot process gas and at least 30% thereof is recovered from the hot flue gas produced by fuel combustion. For example, 50% of said second heat is recovered from said hot process gas and 50% is recovered from said hot flue gas.

Preferably, said hot flue gas mixes with the hot process gas effluent of said step c) to form a mixed stream, and the second heat or a portion thereof is recovered by indirect heat exchenge between the reaction stream and said mixed stream. Said mixed stream has a temperature greater than that of the hot process gas effluent of said step c), preferably greater than 850 °C, more preferably greater than 900 °C.

Said particular embodiment has the following advantages.

First, the stream obtained by mixing the process gas and the flue gas produced by fuel combustion has a higher temperature and a greater flowrate than the process gas, thus making available more reforming heat and at higher temperature. This provides for a more efficient steam reforming compared to a process wherein the heat is only provided by the process gas, which results in the production of make-up gas in a greater amount and/or with a lower content of unreacted hydrocarbons.

Moreover, the heat supplied to the reaction stream undergoing the steam reforming can be increased by increasing the amount of fuel supplied to the burner. It follows that said heat (hence the make-up gas production) can be controlled with the amount of fuel and oxidant used for the combustion independent of the ammonia oxidation, i.e. without changing significantly the production of NO2 (hence the production of nitric acid). This allows to produce ammonia in the desired amount, which is greater than the ammonia produced by using process gas only. For example, ammonia may be produced in a suitable amount to produce both nitric acid and ammonium nitrate, as clear from the example below. Therefore, the process of the invention may also be advantageously integrated with a process for the production of ammonium nitrate.

Preferably, the step a) comprises performing steam reforming in a gas heated reformer (GHR) wherein the hot process gas produced in said step c) is used to provide the heat required to drive the steam reforming reaction. The GHR operates as a heat exchanger, which comprises a cold side traversed by the reaction stream and a hot side trasversed by the hot medium. According to various embodiments, said hot medium is the process gas effluent of said step c) or the mixed stream obtained by mixing the process gas and the flue gas obtained by fuel combustion.

Said GHR is preferably a shell-and-tube heat exchanger, wherein the cold side is preferably the tube-side and the hot side is preferably the shell-side.

Preferably, the ammonia obtained from said step b) provides at least a portion of the stream of ammonia subjected to said step c). More preferably, said stream of ammonia is entirely provided by the ammonia obtained from said step b).

According to a preferred embodiment of the invention, at least a portion of the tail gas is a nitrogen source for the make-up synthesis gas.

Preferably, at least a portion of the second tail gas (i.e. the tail gas obtained from the process of NOx and N2O removal) is added to a hydrogen-containing synthesis gas, thus providing said make-up synthesis gas. The so obtained make-up synthesis gas is then compressed to the ammonia synthesis pressure of said step b) within a make-up gas compressor and subsequently converted into ammonia.

Said hydrogen-containing synthesis gas is obtained by conversion of said hydrocarbon feedstock into a raw synthesis gas, and subsequent purification of said raw synthesis gas. The conversion of said hydrocarbon feedstock includes at least said stage of steam reforming.

In some embodiments, the conversion of said hydrocarbon feedstock also includes, downstream of the steam reforming, a secondary reforming with air or enriched air, or an autothermal reforming (ATR) with oxygen.

The purification of said raw gas preferably comprises: a step of CO shift conversion into CO2, a step of CO2 removal and, optionally, a step of methanation. Preferably said CO2 removal step is carried out with a process of pressure swing adsorption (PSA).

According to a first embodiment of the invention, said at least a portion of the second tail gas used as nitrogen source for obtaining the make-up gas is supplied just before the catalytic conversion of the make-up gas into ammonia, namely at the suction of said make-up gas compressor.

According to a second embodiment, said at least a portion of the second tail gas used as nitrogen source is added to the raw hydrogen-containing synthesis gas (before purification), providing a raw make-up synthesis gas which is subsequently subjected to purification.

Preferably, said raw make-up synthesis gas is subjected to an oxygen removal treatment in order to remove any oxygen contained therein, oxygen being a poison for the ammonia synthesis catalyst. Preferably, said raw make-up synthesis gas is subjected in a suitable reactor to a process wherein oxygen reacts with the synthesis gas containing hydrogen and unconverted hydrocarbons. The conversion of oxygen inside said reactor advantageously allows a further conversion of hydrocarbons, with a consequent increase in the production of hydrogen and hence of ammonia.

Preferably, oxygen is removed catalytically and said reactor contains e.g. one the following catalysts: a deoxidation catalyst, a methanation catalyst, a reforming catalyst, a catalytic partial oxidation (CPOx) catalyst. Use of catalysts is particularly preferred for the case where the oxygen content in the the tail gas is relatively low (i.e. less than 2%), the tail gas is relatively cold (i.e. less than 500 °C), the effluent of the steam reforming has a relatively low temperature (i.e. less than 800 °C). In some embodiments, said tail gas is pre-heated to a temperature higher than 500 °C and the effluent of the steam reforming to a temperature higher than 800 °C in order to increase the reaction temperature, to prevent the reforming reaction from going backwards and to ensure the oxygen conversion.

In a particular embodiment of the invention, the conversion of said hydrocarbon feedstock comprises two subsequent stages of steam reforming, namely a first stage of steam reforming and a second stage of steam reforming, both under provision of steam reforming heat. Preferably, the steam reforming heat of one of said stages is at least partially recovered from the hot process gas obtained from said step c) of catalytic oxidation, as described above. Preferably, the steam reforming heat of the other stage of steam reforming is at least partially recovered from the tail gas from the absorption step d), preferably from the first tail gas. More preferably, the first tail gas is subjected to a combustion process in the presence of a fuel in order to increase its temperature and then is subjected to a thermal recovery. The oxygen contained in said first tail gas advantageously acts as oxidant for the combustion.

Preferably, the steam reforming heat of the first stage is at least partially recovered from the hot process gas from said step c) and the steam reforming of the second stage is at least partially recovered from the tail gas from the absorption step d).

Said combustion process is preferably a non-selective catalytic reduction (NSCR) process. The NSCR process provides a tail gas which comprises nitrogen and residual components such as unconverted fuel (e.g. hydrocarbons or hydrogen), CO, CO2 and oxygen. Accordingly, the NSCR process has the double purpose of increasing the temperature of the tail gas for thermal recovery and of removing NOx and N2O.

Advantageously, an excess fuel is provided to said NSCR process in order to ensure a substantially total conversion of the NOx and N2O. Said excess fuel partially reacts in said second stage of steam reforming, thus increasing the reforming duty and ultimately producing more ammonia. Accordingly, the NSCR process allows to remove NOx and N2O and also to increase the reforming duty.

Preferably, the first tail gas is pre-heated to a temperature higher than 400 °C, or even higher than 500 °C, before being subjected to combustion. After combustion, the second tail gas has a temperature preferably greater than 800 °C, more preferably greater than 900 °C.

Said embodiment with two subsequent stages of steam reforming has the advantage of providing more steam reforming heat and, therefore, increasing the synthesis gas production without significantly changing the production of nitric acid. This allows to produce more ammonia and, therefore, to integrate the present process with a process for the production of ammonium nitrate.

Another object of the present invention is an integrated plant according to the annexed claims.

The present invention has the following advantages.

Since the steam reforming heat is at least partially recovered from the catalytic oxidation of ammonia, less or even no natural gas shall be used as fuel in the steam reformer to provide the refomring heat. It follows that flue gas emissions from the stack of steam reformer have a low flow rate, or are even avoided. As a consequence, the emissions into atmosphere of polluntants such as CO2 are significantly decreased. Furthermore, by reducing or avoiding the flow rate of flue gas emissions into atmosphere, less energy is dissipated, which further decreases the energy consumption of the process.

A further advantage is that the convection section of the steam reformer is drastically reduced or even avoided, and preheating services previously carried out in the convection section of the steam reformer are replaced by heat recovery from the nitric acid process, which results in a further decrease of the overall energy consumption.

The use of the heat from the catalytic oxidation of ammonia as reforming heat rather than to produce steam has also the following advantages: less steam to vent into atmosphere, more efficient steam reforming, lower investment costs (thanks to the combination of the process gas cooling and the steam reforming in a single apparatus).

The advantages will emerge even more clearly with the aid of the detailed description below relating to a preferred embodiment.

### Brief description of the figures

Fig. 1 shows a simplified block scheme of an integrated plant for the synthesis of ammonia and nitric acid according to the invention.
Fig. 2 shows an embodiment of the invention, wherein part of the reforming heat is provided by combustion of a fuel.
Fig. 3 shows another embodiment of the invention, wherein reforming is carried out in a first steam reformer and a second steam reformer.
Figs. 4 to 6 show further embodiments, wherein the tail gas of the nitric acid section is a nitrogen source for the make-up synthesis gas.

### Detailed description

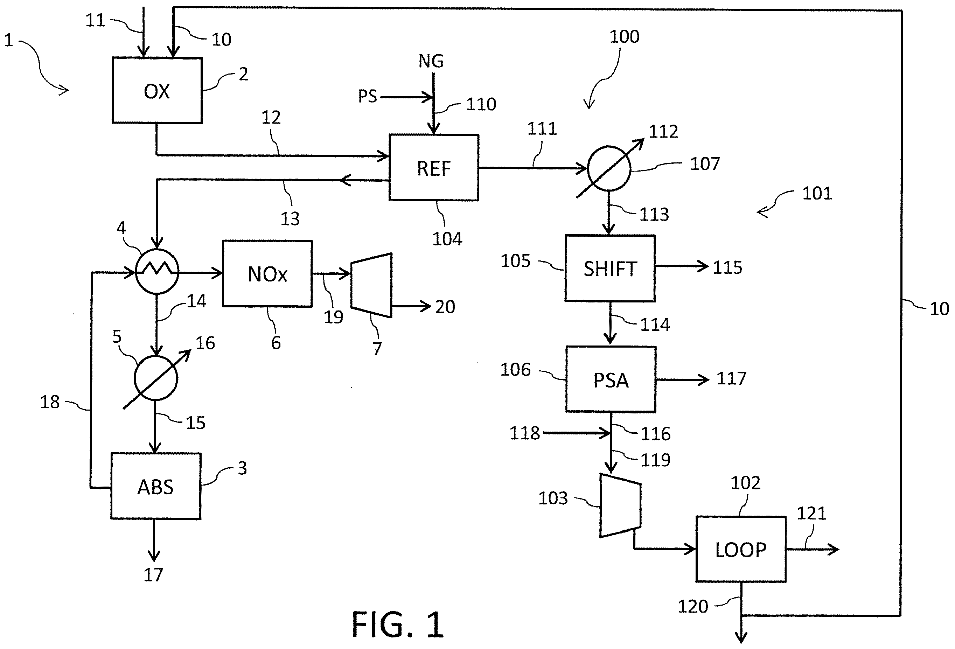

The plant of Fig. 1 comprises a section 1 for the synthesis of nitric acid and a section 100 for the synthesis of ammonia.

The nitric acid section 1 essentially includes a reactor 2 for the catalytic oxidation of ammonia, an absorption tower 3, a first heat exchanger 4, a second heat exchanger 5, a NOx and N2O removal unit 6 and a gas expander 7.

The ammonia section 100 essentially includes a front-end section 101, which provides a make-up gas 119, and a synthesis loop 102, which converts said make-up gas 119 into ammonia 120. The pressure of said make-up gas 119 is elevated to the pressure of the synthesis loop 102 in a syngas compressor 103. The block 104 in the figure represents a steam reformer, the block 105 comprises a shift converter and a subsequent heat exchanger, and the block 106 represents a PSA unit.

The operation of section 1 is as follows.

An ammonia stream 10 and an air flow 11 are fed to the reactor 2, wherein ammonia is catalytically oxidized, e.g. over platinum gauzes, to nitrogen monoxide (NO) and in minor amounts to nitrous oxide (N2O). As the gas cools, a portion of the nitrogen monoxide is further oxidized to nitrogen dioxide (NO2) or dinitrogen tetroxide (N2O4) depending on the residence time, temperature and pressure, and the composition relative to chemical equilibrium.

Said ammonia stream 10 is provided by the synthesis loop 102 of the ammonia section 100. Said air flow 11 provides the amount of oxygen required for the catalytic oxidation of ammonia and oxidation of nitrogen monoxide. The term of NOx is used below to collectively denote NO, NO2 and N2O4.

A process gas 12 containing NOx and N2O leaves the reactor 2. Said process gas 12 has a temperature of about 800-1000 °C, for example of about 850-950 °C. It is subsequently cooled to a temperature of about 300-700 °C, for example of about 450-600 °C, by indirect heat exchange with a reaction stream undergoing the steam reforming reaction in the steam reformer 104. Said heat exchange takes place in the steam reformer 104.

After heat exchange, the cooled process gas leaves the steam reformer 104 as stream 13 and enters the first heat exchanger 4, wherein is used as hot medium for pre-heating a tail gas 18 effluent of the absorption tower 3.

The process gas exits the first heat exchanger 4 as stream 14 and is subjected to thermal recovery in the second heat exchanger 5, with production of steam 16.

The process gas leaves the second heat exchanger as stream 15 and is admitted to the absorption tower 3, wherein NO2 are absorbed in water to yield nitric acid 17 and said tail gas 18. Said tail gas 18 is mostly composed of nitrogen and contains N2O and residual amounts of NOx.

The tail gas 18 is pre-heated in the first heat exchanger 4, as already mentioned above, and subsequently fed to the NOx and N2O removal unit 6, thus providing a treated tail gas 19 impoverished of NOx and N2O. The latter is work-expanded in the expander 7 for energy recovery and the exhaust gas 20 is discharged into the atmosphere.

The section 100 for the synthesis of ammonia operates as follows.

A desulphurized natural gas feedstock NG mixes with a steam current PS, generating a stream 110. Said stream 110, after being pre-heated in a suitable heat exchanger (not shown), enters the steam reformer 104, wherein it is reformed into a reformed gas 111 mostly composed of hydrogen, carbon monoxide, carbon dioxide, water and containing amounts of other components including e.g. residual methane..

The steam reforming heat is provided by the hot process gas 12 leaving the oxidation reactor 2 of the nitric acid acid. For example, said steam reaformer 104 is a shell-and-tube reforming exchanger, wherein the cold side (e.g. the tubes) contains a reforming catalyst and is traversed by the reaction stream undergoing the steam reforming reaction and the hot side (e.g. the shell) is traversed by the hot process gas 12.

The reformed gas 111 has a temperature of about 600-900 °C, for example of about 750-850 °C, and is subjected to thermal recovery in a heat exchanger 107, with production of steam 112.

The reformed gas 111 leaves said heat exchanger 107 as stream 113 and enters the block 105, wherein carbon monoxide is converted into carbon dioxide to produce a shifted gas and said shifted gas is subjected to thermal recovery producing steam 115. After thermal recovery, the shifted gas exits the block 105 as stream 114 and is subjected to purification in the corresponding section 106. According to the example of the figure, said purification section 106 operates a pressure swing adsorption (PSA) process, which provides a purified gas 116 essentially containing hydrogen and a CO2-containing tail gas stream 117.

Said purified gas 116 is added with nitrogen 118 to provide the make-up gas 119 with the required H2:N2 molar ratio for the ammonia synthesis reaction.

The so obtained make-up gas 119 is fed to the syngas compressor 103, wherein its pressure is elevated to the pressure of the synthesis loop 102. The make-up gas is then fed to the loop 102, wherein it is converted into ammonia 120. Further steam 121 is recovered in the synthesis loop 102.

The integration between the section 1 and the section 100 is realized by: a) feeding the hot process gas 12 obtained in the oxidation reactor 2 of the nitric acid section 1 to the steam reformer 104 of the ammonia section 100 for thermal recovery thus obtaining the steam reforming heat, and b) by feeding a portion 10 of the ammonia 120 obtained in the synthesis loop 102 of the ammonia section 100 to the oxidation reactor 2 of the nitric acid section 1.

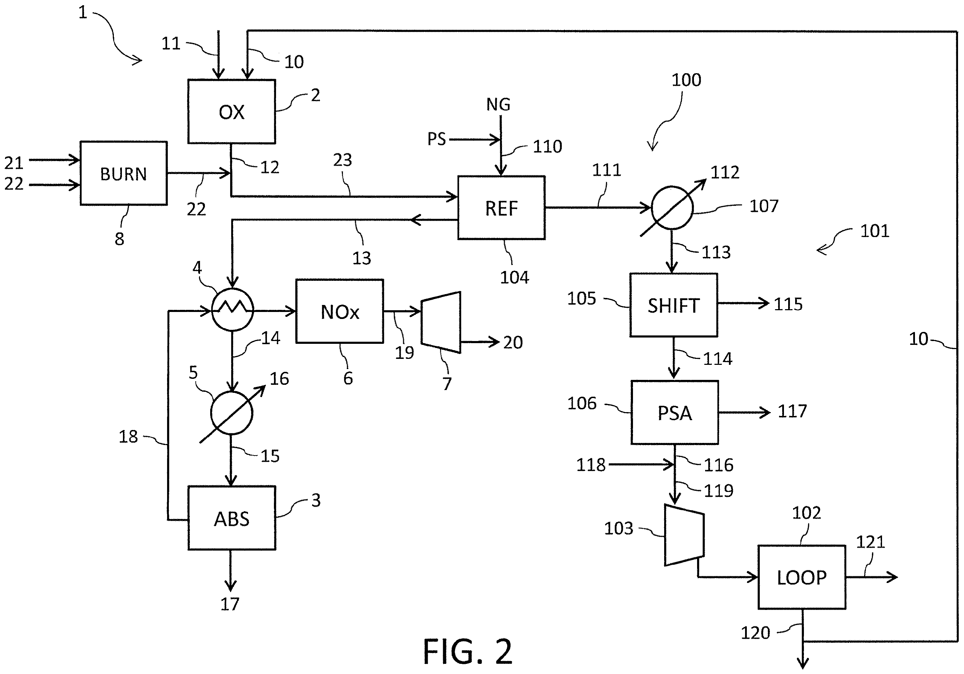

Fig. 2 shows another embodiment of the invention. According to the example of this figure, the nitric acid section 1 further comprises a burner 8 fed with hydrogen (or natural gas) 21 as fuel and an air flow 22 as oxidant. A hot flue gas 22 leaves the burner 8 and mixes with the hot process gas 12 from the oxidation reactor 2 thus forming a stream 23. Said stream 23 is subjected to indirect heat exchange with the reaction mixture undergoing the reaction of steam reforming within the steam reformer 104, thus providing the steam reforming heat.

According to the embodiment of Fig. 2, the hot process gas 12 leaving the oxidation reactor 2 provides a first portion of the steam reforming heat and the flue gas 22 produced by combustion of the fuel 21 inside the burner 8 provides the remaining portion thereof.

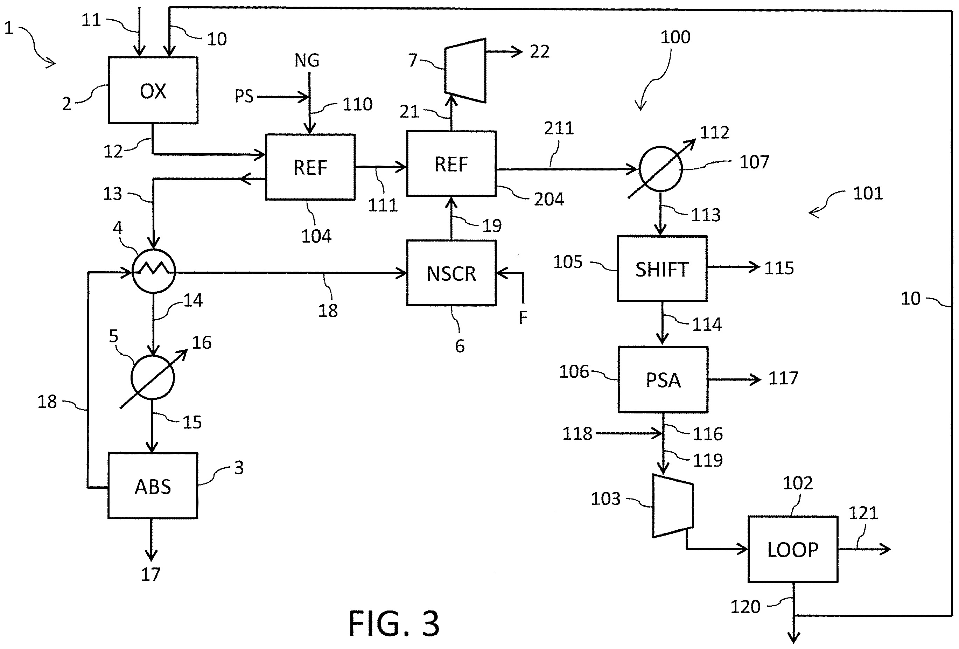

Fig. 3 shows another embodiment, according to which the front-end section 101 comprises a first steam reformer 104 and a second steam reformer 204. According to the example of said figure, the reforming heat of said second steam reformer 204 is provided by combustion of a fuel F within the removal unit 6, wherein NOx and N2O are removed by a process of non-selective catalytic reduction (NSCR).

The input stream 110 is partially reformed in the first steam reformer 104, providing a partially reformed gas 111 with a temperature of about 700-800 °C. The latter is further reacted in the second steam reformer 204, providing a reformed gas 211 which is then subjected to thermal recovery and subsequent purification.

The tail gas 18 from the absorption tower 3 contains oxygen, preferably in an amount above 4% by volume. Said tail gas 18 is pre-heated to a temperature higher than 500 °C in the heat-exchanger 4 and is subjected to NSCR in the NOx and N2O removal unit 6. Said removal unit 6 is also supplied with fuel F, which undergoes combustion in the presence of the oxygen contained in the tail gas 18.

The treated tail gas 19 impoverished of NOx and N2O leaves the removal unit 6 with a temperature higher than 900 °C. Said tail gas 19 is subjected to indirect heat exchange with the reformed gas 111 inside the second steam reformer 204, wherein it is cooled thus providing the reforming heat.

The cooled tail gas leaves the second steam reformer 204 as stream 21 and is work-expanded in the expander 7. The exhaust gas 22 is discharged into the atmosphere.

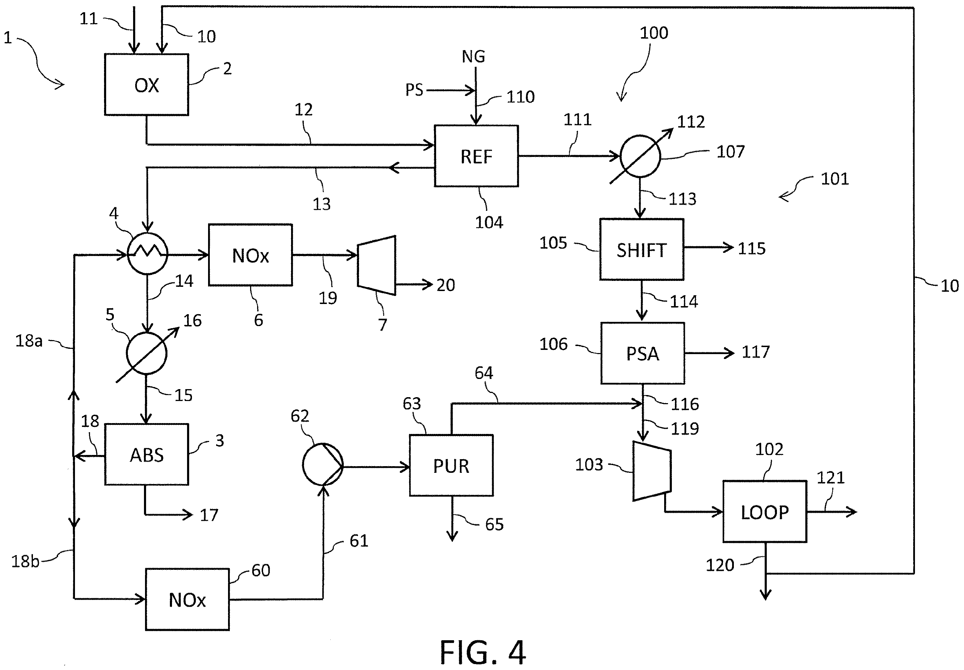

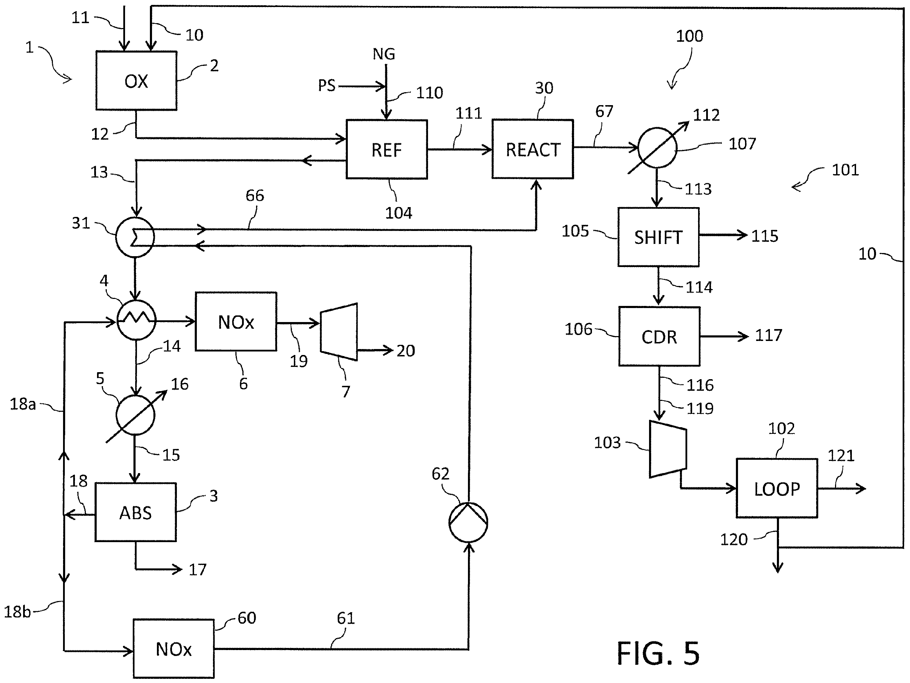

Figs. 4 and 5 show particular embodiments of the invention, wherein part of the tail gas from the nitric acid section 1 is used as nitrogen source for the synthesis of ammonia.

The tail gas 18 leaving the absorption tower 3 splits into a first portion 18a and a second portion 18b. Said first portion 18a is pre-heated in the heat exchanger 4, fed to the NOx and N2O removal unit 6 and then work-expanded in the expander 7. Said second portion 18b is exported from the nitric acid section 1 and fed to the ammonia section 100 to act as process nitrogen for the synthesis of ammonia. Said second portion 18b is initially subjected to NOx and N2O removal in a further unit 60 thus providing a nitrogen-containing gas 61 impoverished of NOx and N2O.

In the example of Fig. 4, said gas 61 is compressed in a booster 62 and subjected to further purification in a dedicated unit 63 to provide nitrogen 64 and a tail gas 65 containing oxygen and other impurities. Nitrogen 64 is then added to the purified gas 116 leaving the PSA unit 106, thus providing the make-up synthesis gas 119.

In the example of Fig. 5, said gas 61, after compression in said booster 62, is pre-heated in a heat exchanger 31 to a temperature higher than 500 °C to provide a pre-heated gas 66. The latter mixes with the effluent 111 of the steam reformer 104 in a reactor 30, wherein the oxygen contained in said gas 66 reacts with unconverted natural gas contained in the effluent 111, thus providing a stream 67 of raw make-up synthesis gas. The latter is subjected to thermal recovery in the heat exchanger 112 and to subsent purification.

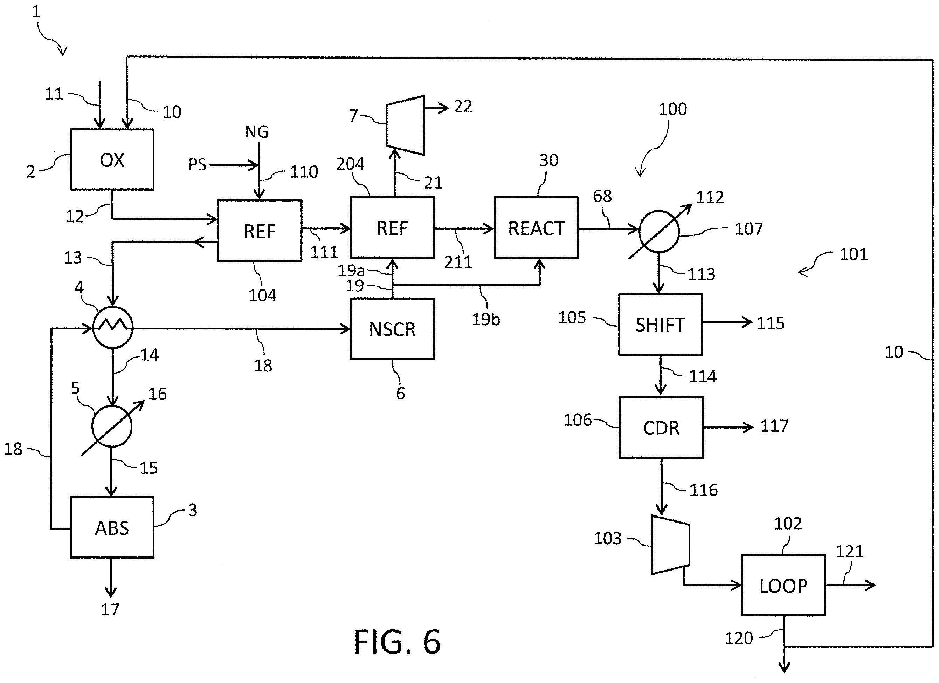

Fig. 6 shows a variant of the embodiment of Fig. 3, wherein the tail gas 19 from the NSCR removal unit 6 splits into a first portion 19a and a second portion 19b. Said first portion 19a is subjected to indirect heat exchange inside the second steam reformer 204, and said second portion 19b mixes with the effluent 211 of the second reformer in a reactor 30, wherein the oxygen contained in the tail gas 19b reacts with unconverted natural gas contained in the effluent 211, thus providing a raw make-up gas 68 containing hydrogen and nitrogen. The latter is subjected to thermal recovery in the heat exchanger 112 and to subsent purification.

In the embodiments shown in Figs. 5 and 6, the block 106 comprises a carbon dioxide removal section anda methanator.

### Examples

With reference to Fig. 1, the advantages of the invention will be better elucidated by way of the example below.

Reference is made to a nitric acid section 1 with a nitric acid production rate of 1'500 t/d, wherein the process gas 12 leaving the oxidation reactor 2 has a temperature of 880 °C and is cooled to a temperature of 500 °C. The steam reformer 104 of the ammonia section 100 is fed with a stream 110 at 450 °C and 25 bar, which has a steam to carbon (S/C) ratio equal to 3. The ammonia consumption for the nitric acid is 425 t/d.

The nitric acid section 1 provides the steam reformer 104 with a duty of 35 Gcal/h and allows to obtain a reformed gas 111 with a temperature of 800 °C. In these conditions, the ammonia production rate is 425 t/d. It follows that the plant of Fig. 1 produces ammonia in a sufficient amount to make nitric acid.

With respect to the prior art, wherein the reforming heat is provided by combustion of a fuel, the transfer of a duty of 35 Gcal/h from the oxidation reactor 2 to the steam reformer 104 according to Fig. 1 allows to reduce the fuel consumption for the synthesis of ammonia (of an amount equivalent to 35 Gcal/h) and to reduce the excess steam produced in the nitric acid process (of a quantity equivalent to 35 Gcal/h, i.e. 45 t/h). Therefore, the energy consumption of a plant according to the invention is much lower than the energy consumption of a plant of the prior art plant with an ammonia production rate of 425 t/d, which consumes 250 Gcal/h of natural gas, i.e. 200 Gcal/h as process gas and 50 Gcal/h as fuel. The plant of the invention consumes at least 35 Gcal/h less of fuel, which would result in almost 15% lower overall gas comsumption.

With reference to Fig. 2, the advantages of the invention will be better elucidated by way of the example below.

In a nitric acid section 1 with a production rate of 1'500 t/d, same as above, the flowrates of the fuel 21 and the oxidant 22 are properly chosen so as to increase the temperature of the process gas 12 from 880 °C to 1100 °C and the mass flowrate of 25%. By cooling the process gas 12 to a temperature of 500 °C, a duty of 70 Gcal/h may be transferred to the steam reformer 104.

The above duty is two times greater than that transferred in the process of Fig. 1. This allows to produce double the amount ammonia, in particular in the amount needed to make nitric acid and also ammonium nitrate.

## Claims

1. Integrated process for the synthesis of ammonia and nitric acid, comprising a synthesis of ammonia including:
a) production of an ammonia make-up synthesis gas (119), comprising steam reforming of a hydrocarbon feedstock (NG) under provision of steam reforming heat, and
b) catalytic conversion of said make-up synthesis gas (119) into ammonia (120),
and a synthesis of nitric acid including:
c) catalytic oxidation of a stream (10) of ammonia, obtaining a hot process gas (12) containing NO2, and
d) absorption of said process gas (12) in water, wherein NO2 react with water to produce a product stream (17) containing nitric acid and a tail gas (18) containing nitrogen,
said process being **characterized in that** at least part of said steam reforming heat is recovered from the hot process gas (12) obtained from the catalytic oxidation of said stream of ammonia (10).

2. Process according to claim 1, the steam reforming heat including:
a first heat which is supplied to a feed stream (110) comprising steam (PS) and said hydrocarbon feedstock (NG) before the steam reforming, and
a second heat which is supplied to a reaction stream undergoing the steam reforming,
wherein at least part of said second heat is recovered from the hot process gas (12) obtained from the step c) of catalytic oxidation.

3. Process according to claim 2, wherein said at least part of the second heat is recovered by indirect heat exchange between the reaction stream and the hot process gas leaving said step c) of catalytic oxidation, said hot process gas (12) acting as hot medium and having a temperature preferably greater than 700 °C, more preferably greater than 850 °C, even more preferably of around 900 °C.

4. Process according to claim 2 or 3, wherein at least 30% of said second heat, preferably at least 50%, more preferably at least 70%, is recovered from said hot process gas (12).

5. Process according to claim 4, wherein said second heat is entirely recovered from said hot process gas (12).

6. Process according to claim 2, wherein part of the second heat is provided by combustion of a fuel (21) in a dedicated burner (8) providing a hot flue gas (22), said fuel preferably comprising hydrogen and/or hydrocarbons.

7. Process according to claim 6, wherein said hot flue gas (22) mixes with the hot process gas (12) leaving said step c) of catalytic oxidation to form a mixed stream (23), and the second heat is recovered by indirect heat exchange between the reaction stream and said mixed stream (23), said mixed stream acting as hot medium and having a temperature preferably greater than 850 °C, more preferably greater than 900 °C.

8. Process according to any of claims 3 to 7, wherein said step a) comprises performing steam reforming in a gas heated reformer (104), said gas heated reformer comprising a cold side traversed by the reaction stream (110) and a hot side trasversed by the hot medium (12, 23).

9. Process according to claim 8, wherein said gas heated reformer (104) is a shell-and-tube heat exchanger, the cold side being the tube-side and the hot side being the shell-side.

10. Process according to any of claims 2 to 9, wherein at least part of said first heat is recovered from a stream (13) of process gas after transferring said at least part of the second heat to the reaction stream undergoing the steam reforming, said stream (13) having a temperature preferably from 300 to 700 °C, more preferably from 450 to 600 °C.

11. Process according to any of the previous claims, wherein the ammonia (120) obtained from said step b) provides at least a portion of the stream of ammonia (10) subjected to said step c).

12. Process according to any of the previous claims, the tail gas (18) obtained from said step d) containing NOx and N2O and being subjected to a process of removal of NOx and N2O, thus providing a treated tail gas (19, 61) impoverished of NOx and N2O, wherein at least a portion of said treated tail gas is a nitrogen source for the make-up synthesis gas (119).

13. Process according to claim 12, wherein said at least a portion of the treated tail gas is added to a hydrogen-containing synthesis gas, thus providing said make-up synthesis gas.

14. Process according to claim 13, wherein said hydrogen-containing synthesis gas (116) is obtained by conversion of the hydrocarbon feedstock (NG) into a raw synthesis gas (111), which includes at least said steam reforming, and subsequent purification of said raw synthesis gas (111).

15. Process according to claim 14, the pressure of said make-up synthesis gas (119) being elevated to the pressure of said step b) in a suitable make-up gas compressor (103) and said at least a portion of the treated tail gas being supplied at the suction of said make-up gas compressor.

16. Process according to claim 14, wherein said at least a portion (19b) of the treated tail gas is added to said raw synthesis gas (111, 211) before purification, providing a raw make-up synthesis gas.

17. Process according to claims 16, said treated tail gas (19, 61) containing oxygen and said raw make-up synthesis gas (111, 211) being subjected to a process wherein oxygen reacts with the synthesis gas, thus providing a raw make-up gas (67, 68) impoverished of oxygen, said process being preferably catalytic.

18. Process according to any of the previous claims, wherein said step a) comprises a first stage (104) of steam reforming and a second stage (204) of steam reforming under provision of steam reforming heat, said second stage receiving the effluent of said first stage, and wherein the tail gas (18) obtained from said d) is subjected to a combustion process providing at least part of the steam reforming heat to one of said first stage and second stage, preferably to said second stage (204) of steam reforming.

19. Process according to claim 18, wherein said combustion process is a non-selective catalytic reduction (NSCR) process.

20. Plant comprising a section (100) for the synthesis of ammonia and a section (1) for the synthesis of nitric acid, wherein the section for the synthesis of ammonia comprises:
a front-end section (101) for the synthesis of an ammonia make-up synthesis gas (119), comprising a gas heated reformer (104) receiving steam reforming heat and a feed stream (110) comprising steam and hydrocarbons, and
a synthesis loop (102, 202), wherein said ammonia make-up synthesis gas (119) is converted into ammonia (120),
wherein the section for the synthesis of nitric acid comprises:
an oxidation reactor (2), wherein a stream of ammonia (10) is oxidized to provide a hot process gas (12) containing NO2, and
an absorption tower (3), wherein said process gas (12) is absorbed in water and said water reacts with NO2 to provide a product stream (17) containing nitric acid and a tail gas (18) containing nitrogen,
said plant being **characterized in that** said gas heated reformer (104) is traversed by said hot process gas (12) as hot medium, thus providing at least part of the steam reforming heat.

21. Plant according to claim 20, comprising a heat exchanger for pre-heating the feed stream (110) of the gas heated reformer (104), wherein a stream (13) of process gas leaving the gas heated reforming (104) acts as hot medium.

22. Plant according to claim 20 or 21, wherein the front-end section (101) comprises a further gas heated reformer (204) receiving steam reforming heat and the effluent of a preceding gas heated reformer (104), said plant also comprising a combustion section (6) wherein the tail gas (18) from the absorption tower (3) is subjected to combustion to provide a flue gas (19), and said further gas heated reformer (204) is traversed by said flue gas (19) as hot medium, thus providing at least part of the steam reforming heat.
